# EUROPÄISCHE PATENTSCHRIFT

(11) **EP 1 786 655 B1**
(45) Veröffentlichungstag und Bekanntmachung des Hinweises auf die Patenterteilung: **14.04.2010**
(21) Anmeldenummer: 05774987.1
(22) Anmeldetag: 27.08.2005
(51) Int. Cl.: B60R 21/16

(54) **GASSACK UND KRAFTFAHRZEUG**
AIRBAG AND A MOTOR VEHICLE
SAC GONFLABLE ET VEHICULE AUTOMOBILE

(30) Priorität: 01.09.2004 DE 102004042209; 06.10.2004 DE 102004048898
(43) Veröffentlichungstag der Anmeldung: 23.05.2007
(73) Patentinhaber: AUTOLIV DEVELOPMENT AB, 447 83 Vargarda (SE)
(72) Erfinder: HAUSER, Stefan, 85778 Haimhausen (DE); ZAURITZ, Ralf, 83607 Holzkirchen (DE); WEYAND, Jürgen, 85258 Weichs (DE); MIKSITS, Christian, 58640 Iserlohn (DE)
(74) Vertreter: Schön, Thilo
(86) Internationale Anmeldenummer: PCT/EP2005/009260
(87) Internationale Veröffentlichungsnummer: WO 2006/024472

(56) Entgegenhaltungen:
- EP-A- 0 700 808
- US-A- 3 887 213
- US-A1- 2003 020 268
- PATENT ABSTRACTS OF JAPAN Bd. 2002, Nr. 07, 3. Juli 2002 (2002-07-03) & JP 2002 079905 A (CALSONIC KANSEI CORP), 19. März 2002 (2002-03-19)

## Beschreibung

### Technisches Gebiet der Erfindung

Die Erfindung betrifft einen Seitengassack nach dem Oberbegriff des Anspruchs 1, einen Frontgassack nach dem Oberbegriff des Anspruchs 6 sowie einen Beifahrer-Frontgassack nach dem Oberbegriff des Anspruchs 9.

### Stand der Technik

Gassäcke, die keine Mechanismen zur situationsabhängigen Regelung des Innendruckes haben, können nur für einen Insassen eines bestimmten Gewichts und einer bestimmten Größe in einer vorgegebenen Unfallsituation ideal sein. Bei Abweichungen hiervon ist der Gassack entweder zu hart oder zu weich. Wenn beispielsweise ein solcher ungeregelter Gassack für einen gegurteten 1,80 m großen, 80 kg schweren Mann, ausgelegt ist, ist er für eine gegurtete, 1,65 m große, 60 kg schwere Frau zu hart, für den oben definierten Mann, der jedoch ungegurtet ist, zu weich.

Um diesem Problem zu begegnen, sind Gassäcke mit wenigstens einer Ventilationsanordnung, über die Gas aus dem Gassack austreten kann, bekannt, wobei der Gasstrom durch diese Ventilationsanordnung situationsabhängig gedrosselt werden kann. Hierzu gibt es aktive Systeme, bei denen beispielsweise Sensoren das Gewicht des Insassen messen und ausgehend von diesem Messergebnis der effektive Querschnitt der Ventilationsanordnung elektrisch verstellt wird. Solche Systeme sind komplex und entsprechend teuer und störungsanfällig.

Aus der gattungsgemäßen EP 1 044 855 B1 ist ein Gassack mit variablem Innendruck bekannt, dessen Innendruck abhängig von der Größe des aufzufangenden Insassen ist, und dessen hiefür zuständige Ventilationsanordnung passiv arbeitet. Der hier beschriebene Gassack ist zweischalig mit einer inneren und einer äußeren Gassackhülle aufgebaut. Die innere Hülle weist in einem bestimmten Bereich Löcher oder durchlässiges Gewebe auf, so dass hier Gas aus dem von der inneren Gassackhülle umschlossenen Gasraum in den Bereich zwischen innerer Gassackhülle und äußerer Gassackhülle gelangen und von dort vollständig aus dem Gassack austreten kann. Prallt nun ein Insasse auf die äußere Gassackhülle, so wird diese abschnittsweise auf die innere Gassackhülle gedrückt, so dass ein Teil der Löcher bzw. des durchlässigen Gewebes abgedeckt und der Gasstrom somit verringert wird. Je größer der auftreffende Insasse ist, desto stärker wird der Gasstrom gedrosselt und um so härter ist der Gassack.

Durch diesen zweischaligen Aufbau wird der Gassack relativ schwer und benötigt im gefalteten Zustand relativ viel Platz. Weiterhin wird ein solcher Gassack beim Befüllen stark kissenförmig, so dass es schwierig ist, einen in dieser Art aufgebauten Seitengassack zu realisieren.

Ein ähnliches Prinzip beschreibt die US 3,887,213.

Beispielsweise in der JP 2002079905 A oder in der EP 0 700 808 A1 sind Gassäcke beschrieben, deren Innendruck von Ventilationsöffnungen, welche Reißnähte oder dergleichen aufweisen, beeinflusst wird.

In der US 2003/0020268 A1 ist ein Gassack beschrieben, dessen Innendruck mittels eines externen Ventils, welches beispielsweise über einen Schlauch mit dem Gassack verbunden ist, beeinflusst wird.

### Gegenstand der Erfindung

Hiervon ausgehend ist es Aufgabe der Erfindung, einen Gassack, wie er in der EP 1 044 855 B1 beschrieben ist, dahingehend weiterzubilden, dass er im Ruhezustand kleiner und leichter ist, und dass er auch als Seiten-Gassack ausgestaltet werden kann.

Diese Aufgaben werden durch einen Seitengassack mit den Merkmalen des Anspruchs 1, einen Frontgassack mit den Merkmalen des Anspruchs 6 sowie einen Beifahrer-Frantgassack mit den Merkmalen des Anspruchs 9 gelöst.

Der eingesetzte Gassack weist ebenfalls eine Ventilationsanordnung auf, die so ausgebildet ist, dass bei Auftreffen eines bestimmten Bereichs der Gassackhülle auf ein Hindernis, in diesem Fall auf einen Insassen, der aus dem Gassack austretende Gasstrom gedrosselt oder vollständig blockiert wird.

Erfindungsgemäß umfasst die Ventilationsanordnung wenigstens eine Öffnung in der Gassackhülle und einen sich hieran anschließenden, mit der Gassackhülle verbundenen Schlauch. Die Öffnung kann hierbei ein Loch in der Gassackhülle, oder ein gasdurchlässiger Gewebeabschnitt sein. Der notwendige Schlauch ist insbesondere beim Ausführungsbeispiel des Anspruchs 4 sehr leicht herstellbar und erhöht das Gewicht und das Packvolumen des Gassacks nur geringfügig. Die Form der Prallfläche wird durch den Schlauch nicht wesentlich beeinflusst, so dass ein efindungsgemäßer Gassack auch als Seitengassack ausgestaltet werden kann.

Die Fläche eines solchen Schlauchs ist relativ gering. Um dennoch den gewünschten Effekt zu erzielen, nämlich dass die Gassackhärte sich an die Größe des Insassen und an die Unfallsituation anpasst, muss sich der Schlauch an einem geschickt gewählten Bereich des expandierten Gassacks befinden. Im Falle eines Seitengassacks erstreckt sich der Schlauch vorzugsweise im wesentlichen waagrecht auf Höhe der Schulter eines sich in seiner Standard-Sitzposition befindenden 50%-Mannes.

Im Falle eines Front-Gassacks erstreckt sich der Schlauch vorzugsweise entweder von einem unteren mittleren Bereich nach außen, und/oder er erstreckt sich im wesentlichen horizontal in einem mittleren bis oberen Bereich. Es ist auch möglich, mehrere parallel zueinander verlaufende Schläuche vorzusehen.

Weitere bevorzugte Ausführungsbeispiele ergeben sich aus den weiteren Unteransprüchen sowie aus den nun mit Bezug auf die Figuren näher dargestellten Ausführungsbeispielen, die auch die genaue Wirkungsweise der Erfindung näher erläutern.

Es zeigen:

### Kurzbeschreibung der Zeichnungen

- Figur 1: Einen vollständig expandierten Seiten-Gassack mit einer erfin- dungsgemäßen Ventilationsanordnung,
- Figur 2: den Schnitt entlang der Linie A-A aus Figur 1,
- Figur 3: den eingebauten Seiten-Gassack aus Figur 1 mit dem Dummy einer kleinen Person,
- Figur 4: den eingebauten Seiten-Gassack aus Figur 1 mit einem Dum- my eines 50%-Mannes in Standard-Sitzposition,
- Figur 5: das in Figur 4 Gezeigte, wobei der Oberkörper des Dummys nach vorne rotiert ist,
- Figur 6: Einen vollständig expandierten Front-Gassack mit einer erfin- dungsgemäßen Ventilationsanordnung,
- Figur 7: den Schnitt entlang der Linie B-B aus Figur 6,
- Figur 8: den Front-Gassack aus Figur 6 mit unterschiedlich großen, ge- gurteten Dummys, deren Kopf und Brustbereich auf dem Gas- sack aufliegen,
- Figur 9: das in Figur 8 Gezeigte im Falle ungegurteter Dummys,
- Figur 10: den Gassack aus den Figuren 8 und 9 mit einem ungegurteten 50%-Dummy im Falle eines um 30° versetzten Frontalzusam- menstoßes,
- Figur 11: ein zweites Ausführungsbeispiel eines erfindungsgemäßen Front-Gassackes mit unterschiedlich großen, gegurteten Dum- mys,
- Figur 12: das in Figur 11 Gezeigte mit ungegurteten Dummys,
- Figur 13: den Front-Gassack aus den Figuren 11 und 12 mit einem 50%- Dummy bei einem um 30° versetzten Schrägaufprall,
- Figur 14: eine Variation zum in den Figuren 6 bis 10 gezeigten Frontgas- sacks und
- Figur 15: eine Variation zum in den Figuren 11 bis 13 gezeigten Front- gassacks,
- Figur 16: eine schematisierte Darstellung einer weiteren Ausführungs- form eines Frontgassacks im aktivierten Zustand,
- Figur 17: eine Draufsicht auf den Gassack aus Figur 16,
- Figur 18: in Gassack aus Figur 16 in einem Ausschnitt in einer vergrö- ßerten Schnittdarstellung,
- Figur 19: ein Querschnitt durch den Schlauch des Gassacks aus Figur 18,
- Figur 20: eine schematisierte Darstellung entsprechend derjenigen der Figur 16 beim Aufprall eines Fahrzeuginsassen oder Dummys auf den Gassack,
- Figur 21: eine Darstellung entsprechend derjenigen der Figur 19, bei Aufprall eines Fahrzeuginsassen oder Dummys darstellend die Querschnittsveränderung des Schlauches,
- Figur 22: einen Ausschnitt eines Gassacks gemäß einer weiteren Ausfüh- rungsform,
- Figur 23: eine schematische Darstellung eines weiteren Ausführungsbei- spiels eines als Beifahrergassack ausgebildeten Frontgassacks mit einem eine Frau repräsentierenden Dummy und
- Figur 24: das in Figur 23 Gezeigte mit einem einen Mann repräsentieren- den Dummy.

### Beschreibung bevorzugter Ausführungsformen

Die erfindungsgemäße Neuerung kann bei Seiten-Gassäcken und bei Front-Gassäcken eingesetzt werden. In einer ersten Ausführungsform, die zunächst erläutert wird, ist der Gassack ein Seiten-Gassack.

### a) Seiten-Gassack

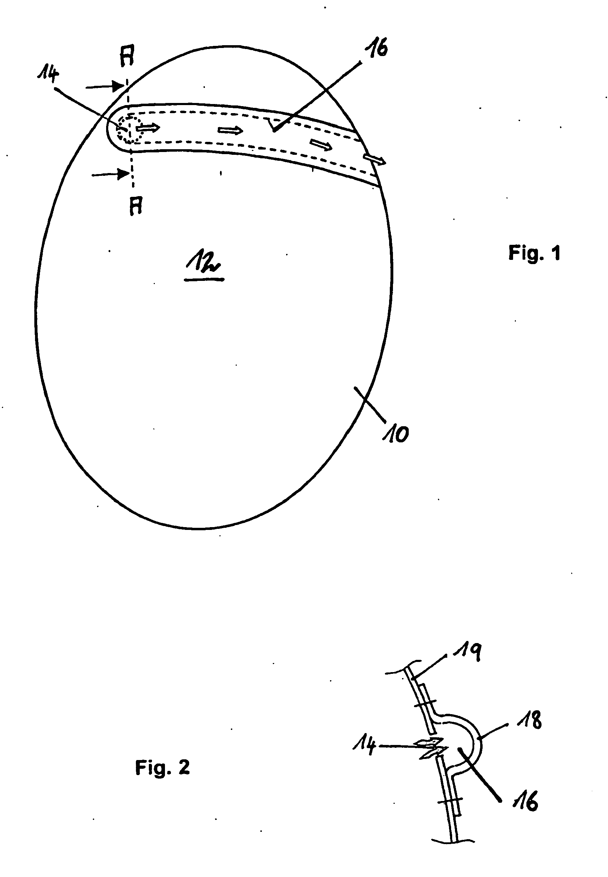

Die Figur 1 zeigt einen als Seiten-Gassack ausgebildeten Gassack 10. In einem oberen Bereich weist die Prallfläche 12 des Gassacks 10 eine Öffnung 14 auf. Von dieser Öffnung 14 aus erstreckt sich der Schlauch 16 leicht gekrümmt, jedoch im wesentlichen horizontal. Der Schlauch 16 wird aus einem Gewebeelement 18, der auf die Außenhülle des Gassacks aufgenäht ist, und durch die Gassackhülle 19 selbst gebildet (siehe hierzu auch Figur 2). Die Öffnung 14 kann ein Loch in der Gassackhülle, oder ein gasdurchlässiger Bereich der Gassackhülle sein. Eine Stirnseite des Schlauches ist offen, so dass eine Austrittsöffnung gebildet wird.

In expandiertem, jedoch unbelastetem Zustand strömt Gas aus dem Inneren des Gassacks 10 durch die Öffnung 14 in den Schlauch 16 und von dort in den Innenraum des Kraftfahrzeugs, aus Sicht des Gassacks also nach außen. Dasselbe passiert, wenn man auf die Prallfläche 12 in einem Bereich unterhalb des Schlauches 16 drückt. Drückt man jedoch von außen auf den Schlauch 16, so wird dieser ganz oder teilweise geschlossen, so dass durch diese Ventilationsanordnung kein oder weniger Gas entweichen kann, so dass der Gassack härter wird.

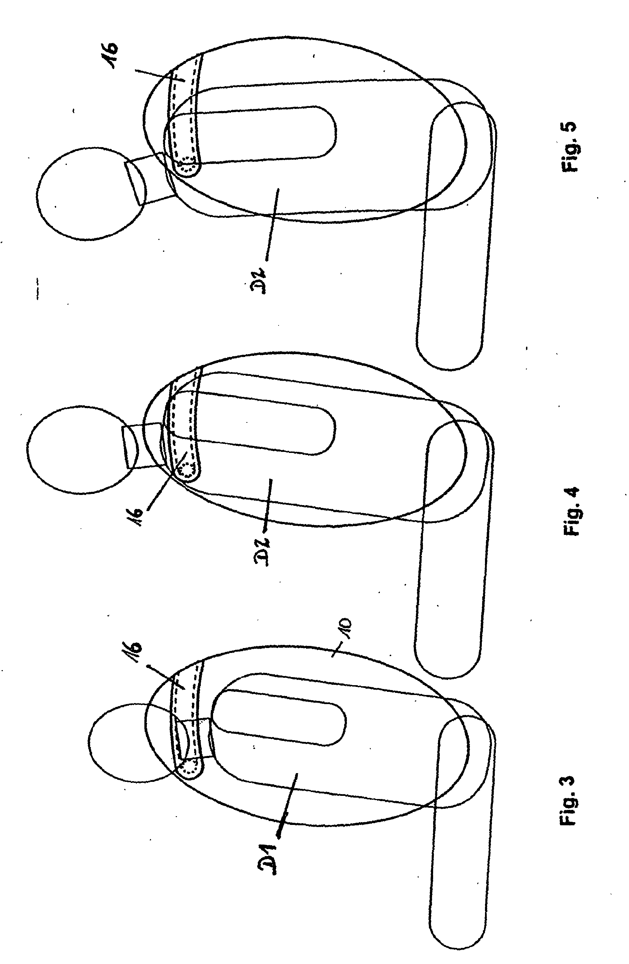

Die Figuren 3 bis 5 zeigen, wie bei einem vollständig expandiertem Gassack 10 der Schlauch 16 im Fahrzeug positioniert sein muss. Figur 3 zeigt hierzu einen Dummy D1 einer 5%-Frau in ihrer Standard-Sitzposition. Der Schlauch 16 befindet sich hier auf Höhe des Halses. Prallt bei einem Seitenaufprall der Dummy D1 beziehungsweise ein Insasse dieser Größe gegen den Gassack 10, so kommt fast ausschließlich der Schulterbereich in Kontakt mit der Prallfläche. Das bedeutet, dass in diesem Fall der Schlauch 16 nicht belastet wird, so dass Gas durch diese Ventilationsanordnung entweichen kann und der Gassack relativ weich wird.

Die Figuren 4 und 5 zeigen die Situation bei einem 50%-Mann. Bei einem diesen Insassen repräsentierenden zweiten Dummy D2 liegt der Schulterbereich auf Höhe des Schlauches 16. Prallt der Insasse auf den Gassack 10, so wird der Gasfluss durch den Schlauch 16 blockiert, es kann hier kein Gas entweichen und der Gassack wird entsprechend härter. Im allgemeinen ist zumindest eine weitere Ventilationsöffnung vorgesehen, so dass der Gassack auch in diesem Fall eine gewisse Nachgiebigkeit beibehält.

Wie man anhand Figur 5 sieht, geschieht ein Blockieren des Schlauches 16 auch dann, wenn der Oberkörper des Insassen aufgrund einer Verzögerungsbewegung in Fahrzeug-Längsrichtung vorrotiert ist.

### b) Front-Gassack

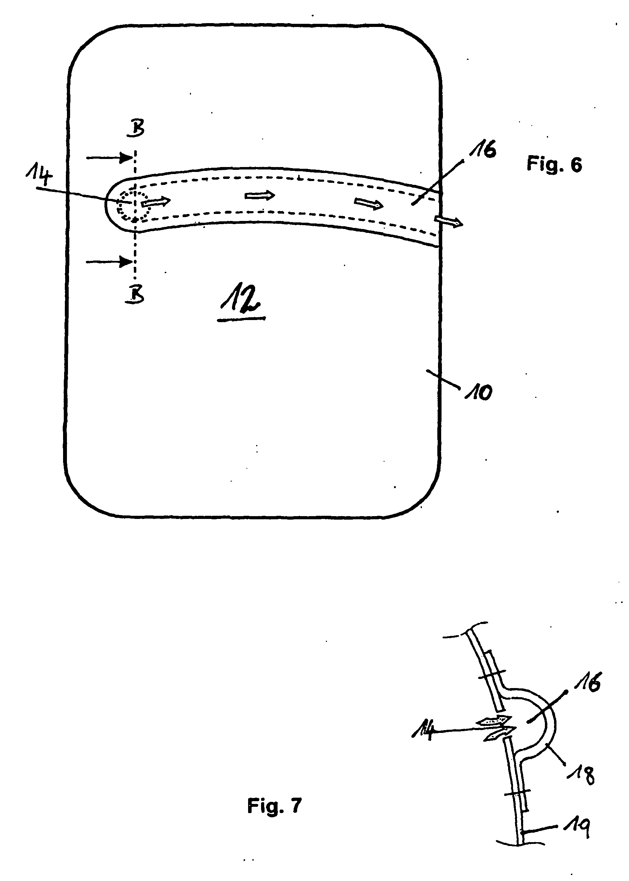

Wie bereits erwähnt, lässt sich das erfindungsgemäße Konzept auch auf Front-Gassäcke anwenden. Figur 6 zeigt ein erstes Ausführungsbeispiel eines solchen als Front-Gassack ausgebildeten Gassacks 10. Wie in der oben erwähnten Ausführungsform auch, trägt die Prallfläche 12 eine aus einer Öffnung 14 und einem Schlauch bestehende Ventilationsanordnung. Hinsichtlich der Funktionsweise und der Ausgestaltung des Schlauches 16 kann auf das oben Gesagte verwiesen werden.

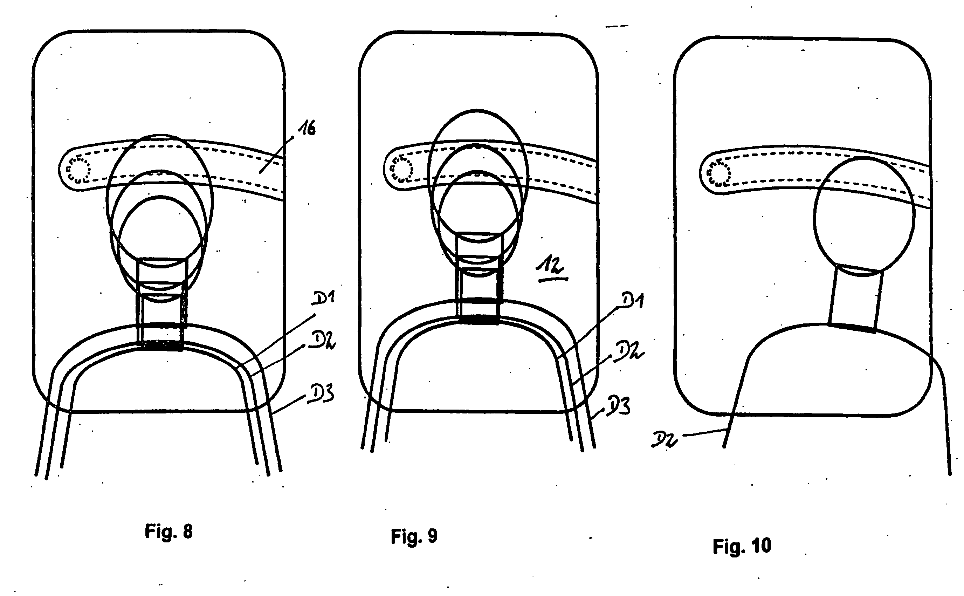

Die Figuren 8 bis 10 zeigen die Lage des in Figur 6 gezeigten Front-Gassacks in Bezug auf einen in den Gassack 10 hineingefallenen Dummys in verschiedenen Unfallsituationen. Figur 8 zeigt hierbei die Situation bei einem Frontal-Zusammenstoß bei einem gegurteten Insassen. Der erste Dummy D1 zeigt hierbei eine 5%-Frau und der zweite Dummy D2 einen 50%-Insassen und der dritte Dummy D3 einen 95%-Mann.

Wie man sieht, schließt nur der 95%-Mann die Ventilationsanordnung und macht den Gassack entsprechend hart. Bei den beiden anderen Insassentypen bleibt die Ventilationsanordnung offen.

Die Figur 9 zeigt die Situation bei denselben Insassentypen, jedoch im ungegurteten Zustand. Durch die größere Vorverlagerung des Beckens ergibt sich ein aufrechterer Oberkörperwinkel und damit eine höhere Position des Brustbereich und des Kopfes. Man erkennt hier, dass der 95%-Mann und der 50%-Insasse im ungegurteten Fall die Ventilationsanordnung schließen und diese lediglich im Fall der 5%-Frau offen bleibt. Man sieht also, dass der Innendruck des Gassacks nicht nur der Größe, und damit im allgemeinen auch der Schwere des Insassen, sondern auch der Unfallsituation - hier gegurtet/ungegurtet - angepasst wird.

Der Schlauch 16 ist in einem leichten Bogen im wesentlichen horizontal auf der Prallfläche 12 angeordnet. Die bogenförmige Führung hat den Sinn, dass das Verhalten des Systems auch dann erhalten bleibt, wenn der Oberkörper des Insassen beim Hineinfallen in den Bag aufgrund eines seitlich versetzten Frontalaufpralls gekippt ist. Dies ist in Figur 10 dargestellt, die einen ungegurteten 50%-Insassen (zweiter Dummy D2) im Falle eines um 30° versetzten Frontalaufpralls zeigt.

Bei den bisher gezeigten Ausführungsbeispielen gibt es im wesentlichen nur zwei Zustände, nämlich "Ventilationsanordnung offen" und "Ventilationsanordnung geschlossen". Es kann natürlich in manchen Anwendungsfällen erwünscht sein, eine Art kontinuierliche Regelung der Gassackhärte zu erreichen.

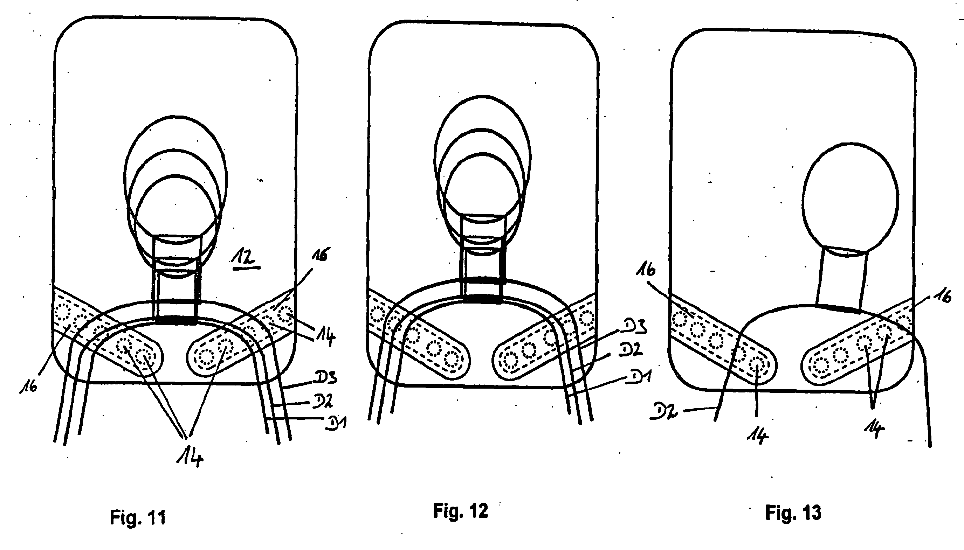

Die Figuren 11 bis 13 zeigen ein Ausführungsbeispiel eines Front-Gassacks, der diese Forderung erfüllt. Bei diesem Ausführungsbeispiel weist die Ventilationsanordnung zwei Schläuche auf, in die jeweils mehrere Öffnungen der Gassackhülle enden. Die beiden Schläuche 16 erstrecken sich hierbei jeweils von einem unteren mittigen Bereich schräg nach oben. Durch diese Anordnung hängt die Zahl der abgedeckten Öffnungen 14 bei einem Frontalaufprall von der Größe des Insassen und von dem Umstand ab, ob der Insasse gegurtet oder ungegurtet ist.

Figur 11 zeigt die Situation bei Dummies D1-D3 unterschiedlicher Größe, die den Dummies der Figuren 8 bis 10 entsprechen. Man sieht, dass hierbei der kleinste Dummy D1 vier Öffnungen, der größte Dummy D3 sechs Öffnungen und der mittlere Dummy D2 fünf Öffnungen abdeckt. Der Airbag wird also mit zunehmender Größe des aufzufangenden Insassen härter.

Die Figur 12 zeigt die Situation aus Figur 11 bei einem ungegurteten Insassen. Man sieht hierbei, dass der jeweils gleiche Insasse mehr Öffnungen abdeckt, so dass der Airbag entsprechend härter wird.

Figur 13 zeigt die Situation bei einem 30° Schrägaufprall und einem ungegurteten 50%-Dummy D2. Aufgrund des symmetrischen Aufbaus der schräg nach oben verlaufenden Schläuche 16, bleibt die Anzahl der abgedeckten Öffnungen 14 gegenüber dem in Figur 12 gezeigten Frontalaufprall gleich. Das heißt, dass das Verhalten des Gassacks zumindest in einem gewissen Bereich invariant gegen den Aufprallwinkel ist.

Die Härte der bisher beschriebenen Ausführungsbeispiele eines Front-Gassacks hängt, wie beschrieben, zumindest in einem gewissen Winkelbereich nicht davon ab, ob es sich um einen reinen Frontalzusammenstoß oder um einen seitlich versetzten Frontalzusammenstoß handelt. Dies ist häufig sinnvoll und gewünscht. In manchen Fahrzeugtypen kann es jedoch gewünscht sein, dass sich der Front-Gassack bei einem seitlich versetzten Frontalzusammenstoß anders verhält als bei einem reinen Frontalzusammenstoß, insbesondere, dass er bei einem seitlich versetzten Frontalzusammenstoß eine größere Rückhaltekraft aufweist.

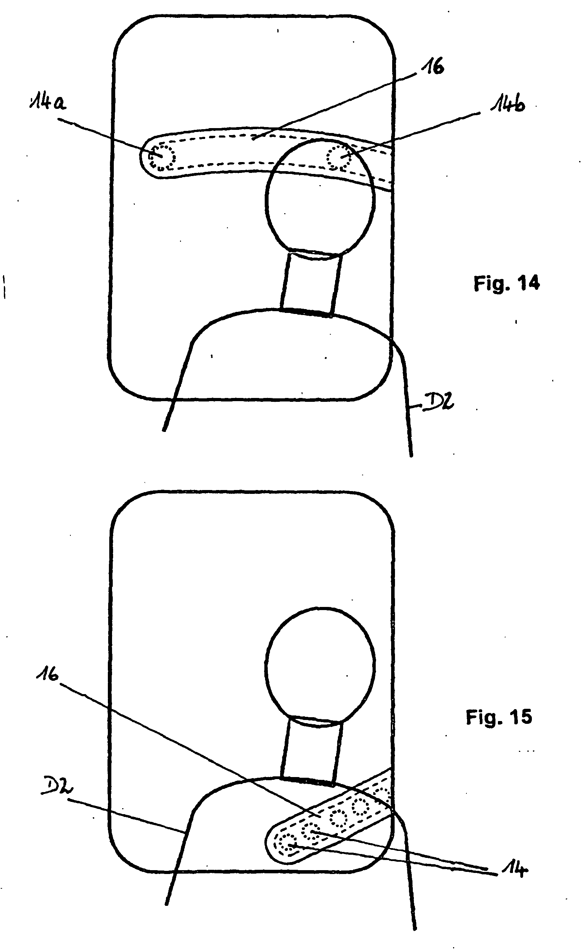

Die in den Figuren 14 und 15 gezeigten Ausführungsbeispiele erfüllen diese Forderung:

Figur 14 zeigt eine Variation des in den Figuren 6 bis 10 dargestellten und beschriebenen Front-Gassacks. Figur 14 entspricht hierbei der in Figur 10 dargestellten Situation. Die Gassackhülle weist neben der ersten Öffnung 14 eine weitere Öffnung 14b auf, die in den Schlauch 16 mündet. Bei einem schräg versetzten Aufprall, wie in Figur 14 dargestellt, werden beide Öffnungen 14,14b blockiert, der Gassack erreicht so seine maximale Härte. Beim reinen Frontalzusammenstoß, siehe hierzu beispielsweise nochmals Figuren 8 und 9, wird nur der Gasstrom aus der ersten Öffnung 14 blockiert, die zweite Öffnung 14b bleibt frei und der Gassack hat eine geringere Härte.

Figur 15 zeigt eine Variation des in den Figuren 11 bis 13 beschriebenen Front-Gassacks. Hier ist nur ein Schlauch 16 vorhanden, in den mehrere Löcher 14 enden. Bei einem Schrägaufprall werden mehr Löcher 14 abgedeckt, ein Ausgleich hierzu durch einen symmetrisch angeordneten weiteren Schlauch 16 findet nicht statt, so dass der Gassack auch hier bei einem schräg versetzten Frontalzusammenstoß einen größeren Innendruck ausbilden kann.

Die Schläuche 16 sind in allen Ausführungsbeispielen zum Rand des Gassacks geführt, so dass der Insasse nicht mit austretenden heißen Gasen in Berührung kommen kann.

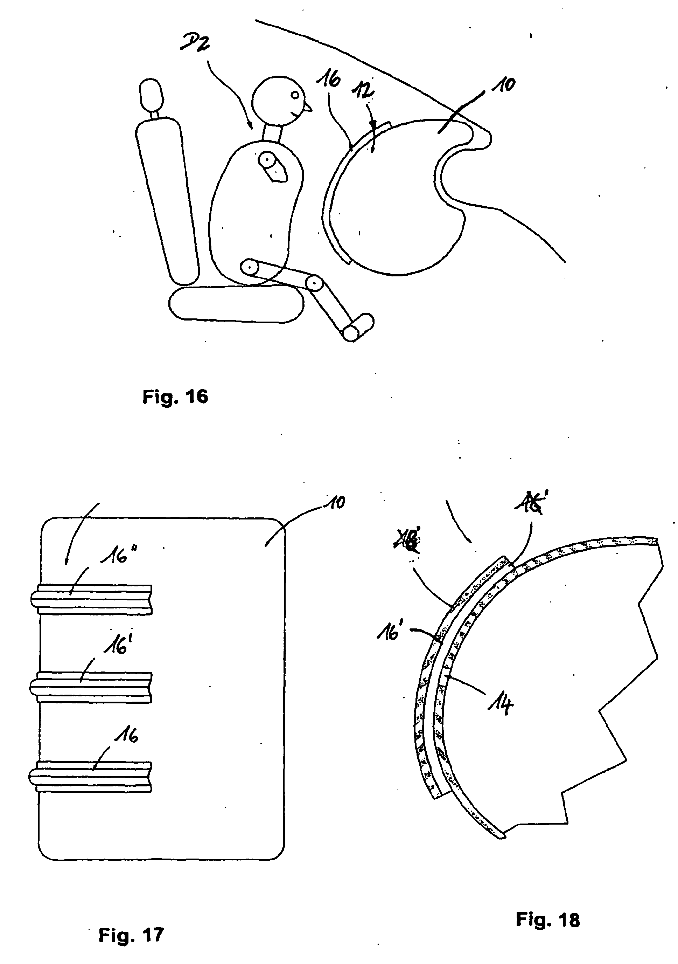

Das in den Figuren 16 bis 21 dargestellte Ausführungsbeispiel weist mehrere parallel auf der Prallfläche 12 eines als Beifahrergassack dienenden Gassacks 10 angeordnete Schläuche 16 auf, die als Ventilationskanäle dienen. Figur 16 zeigt den aktivierten Zustand, in dem der Gassack 10 mit Gas gefüllt ist. Die weiteren zum Aktivieren der Gassack-Einheit notwendigen Komponenten sind der Übersicht halber in den Figuren nicht dargestellt. Figur 16 zeigt den Dummy D2, der im Begriff ist, sich auf den mit Gas gefüllten Gassack 10 zuzubewegen.

Die Anordnung der Schläuche des Gassacks 10 sind in der Draufsicht auf den Gassack 10 in der Figur 17 erkennbar. In die Schläuche (Ventilationskanäle) 16, 16', 16" mündet jeweils eine Öffnung 14. Beim Aufblasen des Gassacks 10 durch seine Befüllung mit Gas strömt aus den Öffnungen 16 Gas aus, wodurch die Schläuche 16, 16', 16" aufgebläht werden. Bei dem dargestellten Ausführungsbeispiel münden die Öffnungen 14 mit Abstand zu den beiden offenen Enden der Schläuche 16, 16', 16" etwa mittig zwischen den beiden Enden.

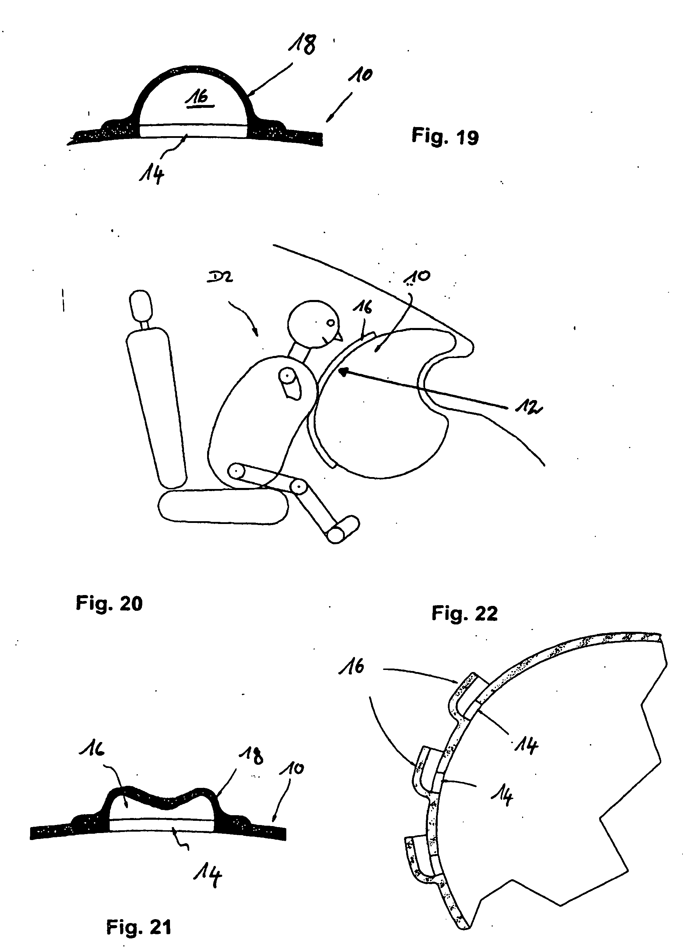

Die Schläuche 16, 16', 16" sind durch jeweils ein mit der Hülle des Gassacks 10 verbundenes Gewebeelement 18 gebildet, wie dieses schematisiert in Figur 19 dargestellt ist. Das Gewebeelement 18 besteht aus dem selben Material wie der Gassack 10. Somit ist jedes Gewebeelement 18 flexibel und nimmt bei dem dargestellten Ausführungsbeispiel etwa die in Figur 19 dargestellte Querschnittsform ein. Der in Figur 19 gezeigt Querschnitt durch den Schlauch 16 ist im Bereich der in den Schlauch 16 mündenden Öffnung 14 dargestellt. Die Gewebeelemente 18 der einzelnen Schläuche 16 heben sich in aufgeblähtem Zustand bedingt durch den im Gassack 10 herrschenden und durch die Öffnungen 14 in die einzelnen Schläuche 16, 16', 16" austretenden Druck von der dem Dummy D2 zuweisenden Prallfläche 12 des Gassacks 10 ab. In Abhängigkeit von der kinetischen Energie, mit der der Dummy D2 auf die Prallfläche 12 des Gassacks 10 mit den Schläuchen 16, 16', 16" auftrifft, werden diese mehr oder weniger bezüglich ihrer Querschnittsfläche deformiert, wie dies schematisiert in Figuren 20 und 21 dargestellt ist. Ausgenutzt werden hierbei die flexiblen, nachgiebigen Eigenschaften der Gewebeelemente 18 der einzelnen Schläuche 16, 16', 16". Trifft der Dummy D2 mit einer höheren kinetischen Energie auf die Schläuche 16, 16', 16" des Gassacks 10 auf, wird im Bereich des Aufpralls die freie zum Entlüften des Gassacks 10 zur Verfügung stehende Querschnittfläche entsprechend stärker deformiert und somit hinsichtlich ihrer freien Durchströmbarkeit reduziert, so dass das im Gassack 10 enthaltene Gas nur langsamer entweichen kann. Der Gassack 10 ist dann härter verglichen mit dem Fall, dass der Dummy D2 mit einer geringeren kinetischen Energie auf den aktivierten Gassack auftrifft. In einem solchen Fall wird die freie Querschnittsfläche der Schläuche 16, 16'. 16" nur zu einem geringeren Ausmaß reduziert (wenn überhaupt); der Gassack 10 ist sodann weicher, da das darin enthaltene Gas über die verbliebene größere Strömungsquerschnittsfläche ausströmen kann.

Figur 22 zeigt einen Ausschnitt eines weiteren Gassacks 10, der eine Vielzahl von Öffnungen 14 aufweist, die jeweils in einen kurzen Schlauch 16 münden. Die Schläuche 16 dienen bei diesem Ausführungsbeispiel dem selben Zweck wie die Schläuche des in den Figuren 16 bis 21 beschriebenen Ausführungsbeispiels. Mit dem in der Figur 22 gezeigten Ausführungsbeispiel soll gezeigt werden, das Schläuche grundsätzlich auch sehr kurz bemessen sein können.

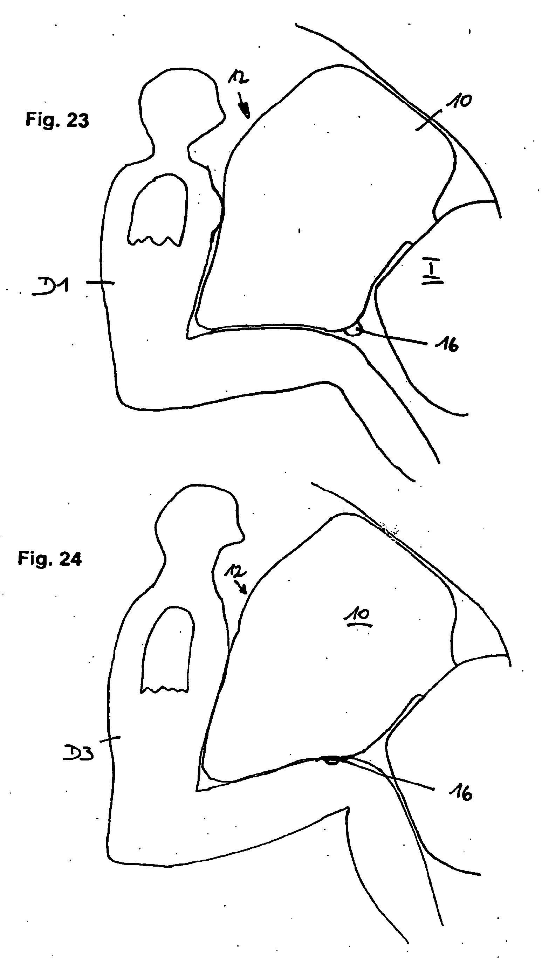

Figuren 23 und 24 zeigen ein weiteres Ausführungsbeispiel eines als Beifahrergassack dienenden Frontgassacks. Hier befindet sich der Schlauch 16, in den die (nicht dargestellten) Öffnungen 14 enden, in einem Bereich, der sich bei vollständig expandiertem Gassack in einem Bereich vor der Instrumententafel 1 befindet. Der Schlauch 16 erstreckt sich im wesentlichen waagrecht und senkrecht zur Fahrzeuglängsachse.

Figur 23 zeigt die Situation bei einem ersten Dummy D1 einer 5-% Frau. Hierbei ist der Oberkörper des Dummys D1 nach dem Aufprall schon vor verlagert. Man sieht, dass der Kniebereich des Dummys D1 den Schlauch 16 nicht berührt, so dass der Gassack 10 durch den Schlauch 16 ventiliert wird. Der Gassack ist somit relativ weich.

Die Figur 24 zeigt die Situation bei einem Dummy D3, der einen 95-% Mann repräsentiert. Aufgrund der deutlich größeren Beinlänge als beim Dummy D1 drückt nach gewisser Vorverlagerung ein Bereich oberhalb des Knies des Dummys D3 auf den Schlauch 16 und verschließt ihn somit. Der Gassack 10 wird durch den Schlauch 16 nicht oder nur gering ventiliert, so dass die gewünschte Erhöhung des Innendrucks und somit der Härte des Gassacks eintritt.

Die Anordnungen des Schlauchs 16 in dem hier dargestellten Bereich vor der Instrumententafel I und die Zuordnung des Schlauches 16 zu den Knien oder einem Bereich kurz oberhalb der Knie des Insassen hat den Vorteil, dass eine Adaption des Innendrucks schon ganz oder teilweise vor dem Auftreffen des Oberkörpers auf die Prallfläche 12 stattfindet. Aufgrund der unterschiedlichten Beinlängen lassen sich außerdem kleine von großen Insassen mit großer Sicherheit unterscheiden.

In der Regel ist bei allen einen Frontgassack betreffenden Ausführungsbeispielen wenigstens eine weitere Ventilationsöffnung vorhanden, so dass eine gewisse Weichheit auch dann gegeben ist, wenn der oder die Schläuche 16 vollständig blockiert sind.

### Bezugszeichenliste

- 10: Gassack
- 12: Prallfläche
- 14: Öffnung
- 16: Schlauch
- 18: Gewebeelement
- 19: Gassackhülle
- D1: erster Dummy - Dummy einer 5%-Frau
- D2: zweiter Dummy - Dummy eines 50%-Insassen
- D3: dritter Dummy - Dummy eines 95%-Mannes
- I: Instrumententafel

## Patentansprüche

1. Seitengassack für ein Kraftfahrzeug mit einer einen Gasraum umschließenden, eine Prallfläche (12) aufweisenden Gassackhülle (19) und wenigstens einer Ventilationsanordnung, die den Gasraum mit der Umgebung verbindet,
wobei der Gasstrom durch die Ventilationsanordnung bei Auftreffen eines bestimmten Bereichs der Gassackhülle (19) auf ein Hindernis gedrosselt oder blockiert wird, wobei die Ventilationsanordnung wenigstens eine Öffnung (14) in der Gassackhülle umfasst, **dadurch gekennzeichnet, dass** die Ventilationsanordnung einen auf der Prallfläche angeordneten Schlauch (16), in den die wenigstens eine Öffnung (14) endet, umfasst, wobei der Schlauch eine nach außen gehende Austrittsöffnung aufweist und bis zum Rand des Gassacks geführt ist, wobei das Drosseln oder Blockieren des Gasstroms durch Drücken von außen auf den Schlauch (16) bei Auftreffen auf das Hindernis erfolgt.

2. Seitengassack nach Anspruch 1, **dadurch gekennzeichnet, dass** die Austrittsöffnung eine Stirnseite des Schlauchs ist.

3. Seitengassack nach Anspruch 2, **dadurch gekennzeichnet, dass** beide Stirnseiten des Schlauchs Austrittsöffnungen sind.

4. Seitengassack nach einem der vorangehenden Ansprüche, **dadurch gekennzeichnet, dass** der Schlauch ein auf der Gassackhülle (19) befestigtes Gewebeelement (18) aufweist, sodass ein Teil der Schlauchwandung aus einem Abschnitt der Gassackhülle (19) gebildet wird.

5. Seitengassack nach einem der vorangehenden Ansprüche, **dadurch gekennzeichnet, dass** mindestens eine weitere Öffnung vorhanden ist, die nicht in einen Schlauch endet.

6. Frontgassack für ein Kraftfahrzeug mit einer einen Gasraum umschließenden, eine Prallfläche aufweisenden Gassackhülle (19) und wenigstens einer Ventilationsanordnung, die den Gasraum mit der Umgebung verbindet, wobei der Gasstrom durch die Ventilationsanordnung bei Auftreffen eines bestimmten Bereichs der Gassackhülle auf ein Hindernis gedrosselt oder blockiert wird, wobei die Ventilationsanordnung wenigstens eine Öffnung (14) in der Gassackhülle umfasst,
**dadurch gekennzeichnet, dass** die Ventilationsanordnung weiterhin einen auf der Prallfläche angeordneten Schlauch (16) umfasst, in den die wenigstens eine Öffnung endet, wobei der Schlauch eine nach außen gehende Austrittsöffnung aufweist, wobei das Drosseln oder Blockieren des Gasstroms durch Drücken von außen auf den Schlauch (16) bei Auftreffen auf das Hindernis erfolgt.

7. Frontgassack nach Anspruch 6, **dadurch gekennzeichnet, dass** sich der Schlauch auf der Prallfläche (12) von einem unteren, mittleren Bereich schräg nach oben erstreckt.

8. Frontgassack nach einem oder Ansprüche 6 oder 7, **dadurch gekennzeichnet, dass** mehrere Öffnungen vorhanden sind.

9. Frontgassack nach einem der Ansprüche 6 bis 8, **dadurch gekennzeichnet, dass** zwei symmetrisch angeordnete Ventilatlonsanordnungen vorhanden sind.

10. Frontgassack nach Anspruch 6, **dadurch gekennzeichnet, dass** sich der Schlauch auf der Prallfläche (12) von einem mittleren bis oberen Bereich im wesentlichen horizontal erstreckt.

11. Frontgassack nach Anspruch 10, **dadurch gekennzeichnet dass** wenigstens zwei Öffnungen vorhanden sind.

12. Beifahrer-Frontgassack für ein Kraftfahrzeug mit einer einen Gasraum umschließenden, eine Prallfläche aufweisenden Gassackhülle (19) und wenigstens einer Ventilationsanordnung, die den Gasraum mit der Umgebung verbindet, wobei der Gasstrom durch die Ventilationsanordnung bei Auftreffen eines bestimmten Bereichs der Gassackhülle auf ein Hindernis gedrosselt oder blockiert wird, wobei die Ventilationsanordnung wenigstens eine Öffnung (14) in der Gassackhülle umfasst,
**dadurch gekennzeichnet, dass** die Ventilationsanordnung weiterhin einen auf der Gassackhülle angeordneten Schlauch (16) umfasst, in den die wenigstens eine Öffnung endet, wobei der Schlauch eine nach außen gehende Austrittsöffnung aufweist, wobei der Schlauch an einem Bereich der Gassackhülle angeordnet ist, der sich bei vollständig expandierter Gassackhülle zwischen der Prallfläche und der Instrumententafel (I) des Kraftfahrzeugs befindet, und sich hierbei im wesentlichen quer zur Fahrzeuglängsrichtung erstreckt, wobei das Drosseln oder Blockieren des Gasstroms durch Drücken von außen auf den Schlauch (16) bei Auftreffen auf das Hindernis erfolgt.

## Claims

1. Side airbag for a motor vehicle, said side airbag having an airbag skin (19) enclosing a gas chamber and comprising an impact surface (12), and at least one ventilation arrangement connecting the gas chamber with the environment, with the gas stream through the ventilation arrangement being throttled or blocked in the case that a certain area of the airbag skin (19) hits an obstacle and with the ventilation arrangement comprising at least one opening (14) in the airbag skin,
**characterised by** the ventilation arrangement comprising a hose (16) being located on the impact surface with the at least one opening (14) ending into said hose, the hose extending to the edge of the airbag and showing an outlet opening leading to the outside, and the throttling or blocking of the gas stream resulting from the pressing onto the hose (16) from the outside on hitting the obstacle.

2. Side airbag according to claim 1, **characterised in that** the outlet opening is a face side of the hose.

3. Side airbag according to claim 2, **characterised in that** both face ends of the hose are outlet openings.

4. Side airbag according to one of the preceding claims, **characterised in that** the hose comprises a fabric element (18) being attached to the airbag skin (19) so that a part of the hose wall is formed by a section of the airbag skin (19).

5. Side airbag according to one of the preceding claims, **characterised in that** at least one further opening is present which does not end into the hose.

6. Front airbag for a motor vehicle, said front airbag having an airbag skin (19) enclosing a gas chamber and comprising an impact surface, and at least one ventilation arrangement connecting the gas chamber with the environment, with the gas stream through the ventilation arrangement being throttled or blocked in the case that a certain area of the airbag skin hits an obstacle and with the ventilation arrangement comprising at least one opening (14) in the airbag skin,
**characterised by** the ventilation arrangement further comprising a hose (16) being located on the impact surface with the at least one opening ending into said hose, the hose showing an outlet opening leading to the outside, and the throttling or blocking of the gas stream resulting from the pressing onto the hose (16) from the outside on hitting the obstacle.

7. Front airbag according to claim 6, **characterised in that** the hose extends on the impact area (12) from a lower middle area slantwise upwards.

8. Front airbag according to one of the claims 6 or 7, **characterised in that** several openings are present.

9. Front airbag according to one of the claims 6 to 8, **characterised in that** two symmetrically arranged ventilation arrangements are present.

10. Front airbag according to claim 6, **characterised in that** the hose on the impact surface (12) extends from a middle to upper area basically horizontally.

11. Front airbag according to claim 10, **characterised in that** at least two openings are present.

12. Passenger front airbag for a motor vehicle, said passenger front airbag having an airbag skin (19) enclosing a gas chamber and comprising an impact surface, and at least one ventilation arrangement connecting the gas chamber with the environment, with the gas stream through the ventilation arrangement being throttled or blocked in the case that a certain area of the airbag skin hits an obstacle and with the ventilation arrangement comprising at least one opening (14) in the airbag skin, **characterised by** the ventilation arrangement further comprising a hose (16) being located on the impact surface with the at least one opening ending into said hose, the hose showing an outlet opening leading to the outside and being arranged in an area of the airbag skin, which is located between the impact surface and the instrument panel (I) of the vehicle and extends basically transverse to the longitudinal direction of the vehicle when the airbag is fully deployed, and the throttling or blocking of the gas stream resulting from the pressing onto the hose (16) from the outside on hitting the obstacle.

## Revendications

1. Airbag latéral pour véhicule automobile avec une enveloppe d'airbag (19) entourant un espace de gaz et comprenant une surface de rebondissement (12), et au moins un dispositif de ventilation reliant l'espace de gaz aux zones environnantes, le flux de gaz étant réduit ou bloqué par le dispositif de ventilation lorsqu'une zone définie de l'enveloppe d'airbag (19) heurte un obstacle, le dispositif de ventilation comportant au moins une ouverture (14) dans l'enveloppe d'airbag, **caractérisé en ce que** le dispositif de ventilation comporte un tuyau (16) disposé sur la surface de rebondissement et dans lequel débouche la au moins une ouverture (14), le tuyau comprenant une ouverture de sortie allant vers l'extérieur et étant guidé jusqu'au bord de l'airbag, la réduction ou le blocage du flux de gaz s'effectuant par une pression externe sur le tuyau (16) lorsque l'obstacle est heurté.

2. Airbag latéral selon la revendication 1, **caractérisé en ce que** l'ouverture de sortie est une face frontale du tuyau.

3. Airbag latéral selon la revendication 2, **caractérisé en ce que** les deux faces frontales du tuyau sont des ouvertures de sortie.

4. Airbag latéral selon l'une quelconque des revendications précédentes, **caractérisé en ce que** le tuyau comprend un élément tissu (18) fixé à l'enveloppe d'airbag (19), de sorte qu'une partie de la paroi du tuyau soit formée d'une section de l'enveloppe d'airbag (19).

5. Airbag latéral selon l'une quelconque des revendications précédentes, **caractérisé en ce qu'**au moins une autre ouverture ne débouchant pas dans un tuyau est prévue.

6. Airbag frontal pour véhicule automobile doté d'une enveloppe d'airbag (19) entourant un espace de gaz et comprenant une surface de rebondissement (12) et d'au moins un dispositif de ventilation reliant l'espace de gaz aux zones environnantes, le flux de gaz étant réduit ou bloqué par le dispositif de ventilation lorsqu'une zone définie de l'enveloppe d'airbag heurte un obstacle, le dispositif de ventilation comportant au moins une ouverture (14) dans l'enveloppe d'airbag, **caractérisé en ce que** le dispositif de ventilation comporte en outre un tuyau (16) disposé sur la surface de rebondissement et dans lequel débouche la ou au moins une ouverture, le tuyau comprenant une ouverture de sortie allant vers l'extérieur, la réduction ou le blocage du flux de gaz s'effectuant par une pression externe sur le tuyau (16) lorsque l'obstacle est heurté.

7. Airbag frontal selon la revendication 6, **caractérisé en ce que** le tuyau s'étend vers le haut en direction de la surface de rebondissement (12) de manière oblique en partant d'une zone inférieure médiane.

8. Airbag frontal selon l'une quelconque des revendications 6 ou 7, **caractérisé en ce que** plusieurs ouvertures sont prévues.

9. Airbag frontal selon l'une quelconque des revendications 6 à 8, **caractérisé en ce que** deux dispositifs de ventilation disposés de façon symétrique sont prévus.

10. Airbag frontal selon la revendication 6, **caractérisé en ce que** le tuyau s'étend sensiblement horizontalement en direction de la surface de rebondissement (12) en partant d'une zone médiane à supérieure.

11. Airbag frontal selon la revendication 10, **caractérisé en ce qu'**au moins deux ouvertures sont prévues.

12. Airbag frontal passager pour véhicule automobile doté d'une enveloppe d'airbag (19) entourant un espace de gaz et comprenant une surface de rebondissement et d'un dispositif de ventilation reliant l'espace de gaz aux zones environnantes, le flux de gaz étant réduit ou bloqué par le dispositif de ventilation lorsqu'une zone définie de l'enveloppe d'airbag heurte un obstacle, le dispositif de ventilation comportant au moins une ouverture (14) dans l'enveloppe d'airbag, **caractérisé en ce que** le dispositif de ventilation comporte en outre un tuyau (16) disposé sur l'enveloppe de gaz et dans lequel débouche la au moins une ouverture, le tuyau comprenant une ouverture de sortie allant vers l'extérieur, le tuyau étant disposé sur une zone de l'enveloppe d'airbag située entre la surface de rebondissement et le tableau de bord (1) du véhicule automobile lorsque l'enveloppe d'airbag est entièrement dilatée, et s'étendant dans ce cas sensiblement transversalement à la direction longitudinale du véhicule, la réduction ou le blocage du flux de gaz s'effectuant par une pression esterne sur le tuyau (16) lorsque l'obstacle est heurté.
